# EUROPÄISCHE PATENTSCHRIFT

(11) **EP 2 059 185 B1**
(45) Veröffentlichungstag und Bekanntmachung des Hinweises auf die Patenterteilung: **01.10.2014**
(21) Anmeldenummer: 07786168.0
(22) Anmeldetag: 18.07.2007
(51) Int. Cl.: A61C 5/06, B05C 17/01, B05C 17/005, A61C 9/00

(54) **GERÄT ZUM ERZEUGEN EINER MEHRKOMPONENTENMASSE**
DEVICE FOR PRODUCING A MULTI-COMPONENT COMPOUND
APPAREIL DE FORMATION D'UNE PÂTE À PLUSIEURS COMPOSANTS

(30) Priorität: 18.08.2006 DE 102006038897
(43) Veröffentlichungstag der Anmeldung: 20.05.2009
(73) Patentinhaber: Mühlbauer Technology GmbH, 22547 Hamburg (DE)
(72) Erfinder: MEYER, Sven, 21641 Apensen (DE); WEIHRAUCH, Matthias, 25336 Klein Nordende (DE); WALLBOTT, Jürgen, 35633 Lahnau (DE)
(74) Vertreter: Glawe, Delfs, Moll
(86) Internationale Anmeldenummer: PCT/EP2007/006395
(87) Internationale Veröffentlichungsnummer: WO 2008/019745

(56) Entgegenhaltungen:
- EP-A- 1 279 379
- DE-A1- 3 738 960

## Beschreibung

Die Erfindung betrifft ein Gerät zum Erzeugen einer Mehrkomponentenmasse, insbesondere für Dentalzwecke, durch Auspressen und Mischen ihrer Komponenten aus Kartuschen, die in einem dynamischen Mischer münden und austauschbar in dem Gerät angeordnet sind, mit einem ersten Elektromotor für den gemeinsamen Vorschub der den Kartuschen zugeordneten Kolben und einem zweiten Elektromotor für drehenden Antrieb von Mischelementen im Mischer über eine Welle, die durch Federvorspannung in Eingriff mit dem Mischer gehalten ist und gegen die Federvorspannung vom Mischer zurückziehbar ist.

Mit einem bekannten Gerät dieser Art (EP 1 279 379 B1) können Mehrkomponentenmassen ausgegeben und gemischt werden. Dabei muss mehr oder weniger häufig der Mischer ausgewechselt werden. Dies ist einerseits aus hygienischen Gründen erforderlich, wenn die gemischte Masse zu lange im Mischer verbleibt. Insbesondere ist dies aber erforderlich, wenn die gemischte Masse aushärtet, da dann der Mischer nach einiger Zeit unbrauchbar wird. Zu diesem Zweck ist es bei dem bekannten Gerät erforderlich, zunächst die Kolben ganz zurückzufahren. Am Ende dieser Bewegung wird dann die den Mischer antreibende Welle zurückgezogen und dadurch vom Mischer gelöst, was zum Beispiel durch einen Querriegel bewirkt werden könnte, der die beiden Kolben verbindet. Der Mischer kann dann seitlich herausgezogen werden und durch einen neuen ersetzt werden. Werden die Kolben erneut zum Auspressen der Mehrkomponentenmassen bewegt, so wird durch die Federkraft die Welle wieder in Eingriff mit dem Mischer gedrückt.

Der Nachteil dieses Geräts besteht darin, dass die Kolben erst vollständig zurückgefahren werden müssen, wenn der Mischer ausgewechselt werden soll. Dies bereitet keine Probleme, wenn die Kartuschen vollständig geleert waren. In vielen Fällen will man aber dieselbe Füllung der Kartuschen nacheinander mehrmals teilweise auspressen, wobei zwischendurch der Mischer gewechselt werden muss, wenn zwischen einzelnen Auspressvorgängen zu viel Zeit verstrichen ist und die Komponenten deswegen im Mischer zumindestens teilweise ausgehärtet sind. In diesem Falle ist es nachteilig, wenn jeweils die Kolben erst vollständig zurückgefahren werden müssen. Dies bedeutet einen erheblichen Zeitverlust, insbesondere deshalb, weil die Kolben zwar schnell zurückgefahren werden können, anschließend aber sehr langsam an das noch in den Kartuschen befindliche Material herangefahren werden müssen, um vorsichtig die Berührung mit dem noch vorhandenen Material "abzutasten". Auch könnte durch das Zurückfahren in unerwünschter Weise Luft in die Kartuschen eindringen.

Die Aufgabe der Erfindung besteht in der Schaffung eines Geräts der eingangs genannten Art, bei dem der Mischer ohne vollständiges Zurückfahren der Kolben ausgewechselt werden kann.

Die erfindungsgemäße Lösung besteht darin, dass die Welle mit einem sich radial erstreckenden Vorsprung versehen ist, der durch die Federvorspannung auf eine rampenförmig ansteigende, am Fuß derselben mit einer Anschlagfläche versehene Nockenfläche eines mit einer sägezahmförmigen Verzahnung versehenen, mit der Welle koaxialen Zahnrads gedrückt wird, das in einer ersten Winkelrichtung, in der die Nockenfläche ansteigt, durch eine Sperrklinke an einer Drehung gehindert ist und in der dazu entgegengesetzten zweiten Winkelrichtung drehbar ist.

Beim Auspressbetrieb wird die Welle in der zweiten Drehrichtung gedreht. Der Vorsprung an der Welle liegt dabei am Fuß der Nockenfläche an der Anschlagfläche an und dreht das Zahnrad. Befand sich anfangs der Vorsprung auf der Rampe, so wird er durch die Drehbewegung zum Anschlag geführt, da das Zahnrad nicht frei drehbar ist, sondern durch die Sperrklinke auch in der erlaubten Drehrichtung eine ausreichende Widerstandskraft erzeugt wird. Diese wird aber überwunden, wenn der Vorsprung an der Anschlagfläche anliegt und dadurch das Zahnrad dreht. Die Welle ist dabei im Eingriff mit dem Mischer.

Soll der Mischer ausgewechselt werden, so wird die Welle um einen vorbestimmten Winkel in der ersten Winkelrichtung gedreht. Das Zahnrad kann dabei nicht mitdrehen, da es durch die Sperrklinke daran gehindert ist. Der Vorsprung wandert dabei auf der Rampe nach oben und zieht dadurch die Welle in Axialrichtung ebenfalls nach oben, so dass sie aus dem Eingriff mit dem Mischer herausgezogen wird, der dann ausgewechselt werden kann.

Nachdem ein neuer Mischer eingesetzt ist und der Mischer betrieben werden soll, erfolgt wieder Drehung in der zweiten Drehrichtung. Der Vorsprung wandert aufgrund der Federvorspannung an der Rampe herab, bis er am Anschlag anliegt. Die Welle dringt dabei in das entsprechende Kupplungselement des Mischers ein, so dass dieser qedreht werden kann.

Es ist auch möglich, nachdem ein neuer Mischer eingesetzt ist, den Vorsprung über die ansteigende Nockenfläche hinaus weiter in der ersten Drehrichtung zu drehen, bis er unter der Wirkung der Federvorspannung am Anschlag anliegt.

Vorteilhafterweise erstreckt sich die Rampe über einen Winkelbereich von mehr als 270°. Es ist dann keine besonders steile Rampe erforderlich, die größere Drehmomente erfordern würde, um den Vorsprung auf der Rampe nach oben zu bewegen.

Vorteilhafterweise weist die Rampe an ihrem oberen Ende einen Anschlag für den Vorsprung der Welle auf. Erreicht der Vorsprung diesen Anschlag, so kann er nicht weiter bewegt werden, da sich das Zahnrad in diese Richtung nicht drehen kann. Der dadurch sich erhöhende Antriebsstrom des Motors kann detektiert werden, so dass der Motor abgeschaltet werden kann.

Bei einer anderen Ausführungsform oder zusätzlich wird die Drehung in der ersten Winkelrichtung durch elektronische Steuerung nach Drehung um einen vorbestimmten Winkel beendet.

Wenn im vorstehenden von "oben" die Rede ist, so ist damit der Fall gemeint, dass die Achsen der Kartuschen im Wesentlichen senkrecht ausgerichtet sind, wobei sich der Mischer dann unten befindet, oder zumindestens so schräg angeordnet sind, dass sich der Mischer im Wesentlichen tiefer als der Hauptteil der Kartuschen befindet.

Die Erfindung wird im Folgenden anhand einer vorteilhaften Ausführungsform unter Bezugnahme auf die beigefügten Zeichnungen beschrieben. Es zeigen:
- Fig. 1: in perspektivischer Darstellung ein Gerät nach dem Stand der Technik;
- Fig. 2: die wesentlichen Elemente der Erfindung für den Antrieb des Mischers;
- Fig. 3: eine Detailansicht des in Fig. 2 mit einem Kreis versehenden Teils;
- Fig. 4: eine Darstellung der Mischerdüse und der Mischerantriebswelle.

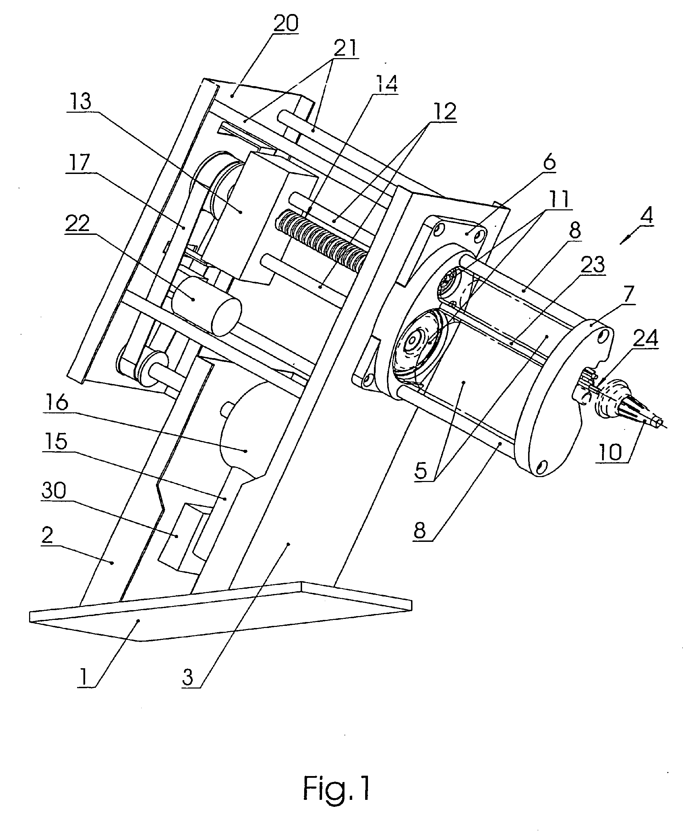

Es soll zunächst im Zusammenhang mit Fig. 1 ein bekanntes Gerät (EP 1 279 379 A1) beschrieben werden, bei dem die Erfindung Anwendung finden kann.

Von einem Fußteil 1 erheben sich Trägerplatten 2, 3. An letzterer ist eine Halterung 4 für strichpunktiert angedeutete Kartuschen 5 vorgesehen. Es spielt in diesem Zusammenhang keine Rolle, ob die Kartuschen, die vorzugsweise zylindrisch ausgebildet sind, unmittelbar mit den Komponenten befüllt sind oder einen ggf. auswechselbaren, die Komponente enthaltenden Schlauchbeutel aufnehmen.

Die Halterung 4 umfasst eine hintere Halterungsplatte 6 und eine vordere Halterungsplatte 7, die durch Anker 8 zusammengehalten sind. Die Kartuschen 5 können dazwischen passend eingesetzt werden. Es können weitere, nicht gezeigte Halterunqsmittel vorgesehen sein, die ihre seitliche Positionierung bewirken.

An der vorderen Halterungsplatte 7 ist eine nicht dargestellte Einrichtung zum Anbringen einer strichpunktiert angedeuteten Mischdüse 10 vorgesehen. Vorteilhafterweise wird die Mischdüse senkrecht zu ihrer Längserstreckung von der Seite her eingeschoben, da sie so sehr gut dem Materialdruck der Komponenten beim Auspressen widerstehen kann und durch das Material nicht aus ihrer Halterung gedrückt wird. Die Mischdüse 10 weist an ihrem der Halterungsplatte 7 zugewendeten Ende zwei Einlassöffnungen auf, die in bekannter Weise mit den Auslassöffnungen der Kartuschen 5 direkt oder indirekt kommunizieren. Das Merkmal, dass die Kartuschen nebeneinander angeordnet sind, soll nur besagen, dass sie so angeordnet sind, dass sie gleichzeitig und synchron betätigt werden können. Eine darüber hinausgehende Positionsbeschränkung, beispielsweise auf parallele Anordnung, ist damit nicht beabsichtigt, obwohl diese offensichtlich vorteilhaft ist.

Die Kartuschen 5 enthalten Kolben. Diese können ggf. dann entfallen, wenn die Kartuschen Folienbeutel enthalten. Die Stempel treten dann an die Stelle der im Anspruch genannten Kolben. Für den Vorschub der Kolben bzw. der hinteren Beutelstirnfläche sind in dem Gerät Stempel 11 vorgesehen, die in der Zeichnung in dem Zustand gezeigt sind, in welchem sie zum Zwecke des Kartuschenaustauschs in die hintere Halterungsplatte 6 zurückgezogen sind. Sie sind am vorderen Ende von Stempelstangen 12 angeordnet, deren hintere Enden starr in einem Querriegel 13 befestigt sind, der mittels einer Gewindespindel 14 in Richtung zur Mischdüse vorgeschoben oder in Gegenrichtung zurückgezogen werden kann. Die Stempel 11 können ggf. ausgetauscht werden, wenn Kartuschen unterschiedlichen Durchmessers einzusetzen sind. Auch ihr Abstand voneinander kann veränderbar sein. Wenn die Kartuschen 5 in das Gerät eingelegt sind, werden die Stempel 11 durch Vorschub des Querriegels 13 vorgeschoben, bis sie die Kolben in den Kartuschen 5 erreichen. Diese Vorschubbewegung kann automatisch durch das Einlegen der Kartuschen oder manuell durch das Einschalten des Geräts ausgelöst werden.

Für den Vorschub und Rückzugsantrieb der Gewindespindel 14 ist ein Motor 15 mit Getriebe 16 vorgesehen, dessen Antriebsbewegung durch einen Riementrieb 17 auf die Gewindespindel 14 übertragen wird. Für die Lagerung der Gewindespindel 14 und der zum Riementrieb 17 gehörigen Ringscheiben sind paar d nicht dargestellte Einrichtungen vorgesehen, die an der Platte 3 und einer weiteren Gestellplatte 20 angeordnet sind, die über Säulen 21 starr mit der Platte 3 verbunden ist.

Ein weiterer Motor 22 ist an der Platte 20 angeordnet und in nicht gezeigter Weise antriebsmäßig verbunden mit einer Mischerantriebswelle 23, die zwischen den Platten 3 und 20 koaxial innerhalb der Gewindespindel 14 liegt, zwischen den Kartuschen 5 von der hinteren Halterungsplatte 6 zur vorderen Halterungsplatte 7 geführt und in dieser gelagert ist. Die Mischerantriebswelle 23 kann zum Beispiel mittel Riemen angetrieben werden. Sie schaut aus der vorderen Halterungsplatte 7 in Form eines Ansatzes 24 heraus, der zum Zwecke der Drehverbindung mit der nicht gezeigten Mischerwelle beispielsweise mehrkantig (nicht gezeigt) ausgebildet ist.

Der Wellenansatz 24 kann gegen Federkraft zurückgeschoben werden, bis er nicht mehr aus der vorderen Halterungsplatte 7 herausschaut. Es kann auch vorgesehen sein, dass dann, wenn die Stempel 11 zum Zwecke des Kartuschenaustausches gänzlich zurückgezogen sind, er gleichfalls in die vordere Halterungsplatte 7 zurückgezogen ist, um das Ansetzen einer neuen Mischerdüse 10 zu erleichtern.

Es ist eine bei 30 schematisch angedeutete elektronische Einheit 30 vorgesehen. Mit dieser wird die Bewegung der Kolben gesteuert. Dabei kann vorgesehen sein, dass dann, wenn die Stempel 11 zum Zwecke des Kartuschenaustausches gänzlich zurückgezogen sind, der Wellenansatz 24 gleichfalls in die vordere Haltungsplatte 7 zurückgezogen ist, um das Ansetzen einer neuen Mischerdüse 10 zu ermöglichen oder zumindest zu erleichtern.

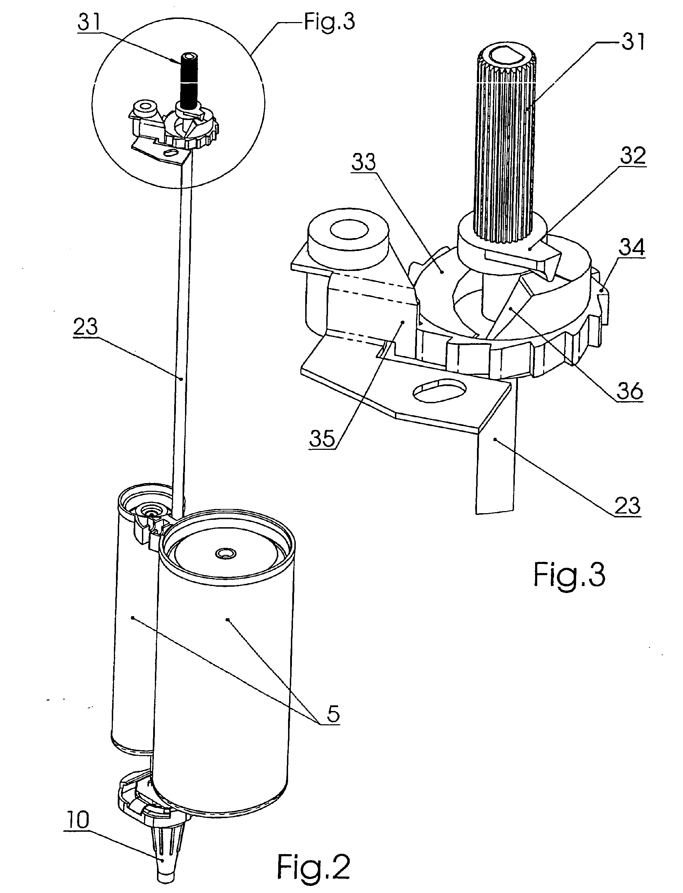

Der Nachteil, das die Stempel 11 völlig zurückgezogen werden müssen, bevor der Wellenansatz 24 ebenfalls zurückgezogen ist und die Mischerdüse 10 ausgewechselt werden kann, wird nun bei dem Gerät der Erfindung vermieden. In den Fig. 2 und 3 sind dabei nur die erfindungswesentlichen Teile gezeigt; die übrigen Teile entsprechen dem Stand der Technik. Insbesondere sind in der Fig. 2 alle Teile zwischen den Trägerplatten 2 und 3 nicht dargestellt, die man sich im in Fig. 2 freien länglichen Bereich der Mischerantriebswelle 23 vorzustellen hat.

Die Mischerantriebswelle wird durch den Motor 22 über ein Zahnrad 31 angetrieben, das mit einem entsprechenden Antriebszahnrad zusammenarbeitet und länglich ist, damit auch bei Verschiebung der Mischerantriebswelle 23 in axialer Richtung der Antrieb gewährleistet ist. Wie dies in Fig. 2 und detailliert in Fig. 3, die den mit einem Kreis bezeichneten Ausschnitt von Fig. 2 im vergrößerten Maßstab darstellt, gezeigt ist, weist die Mischerantriebswelle 23 an einem ringförmigen Element einen Vorsprung 32 auf, der sich auf einer ansteigenden Nockenfläche 33 eines Zahnrads 34 bewegen kann, das mit einer sägezahnförmigen Verzahnung versehen ist. Durch eine Sperrklinke 35 ist dabei erreicht, dass sich das Zahnrad 34 in der in Fig. 3 gezeigten Darstellung nur im Gegenuhrzeigersinn drehen kann. Bei der in Fig. 3 dargestellten Stellung befindet sich der Vorsprung 32 auf dem oberen Ende der Nockenfläche 33. Die Mischerantriebswelle 23 ist dabei gegen die Kraft einer nicht gezeigten Feder nach oben und von der Mischdüse 10 weggezogen, so dass sie nicht mehr im Eingriff mit der Mischerdüse 10 ist. Die Mischerdüse kann daher entfernt werden. Nachdem eine neue Mischerdüse 10 eingesetzt ist und der Auspressvorgang wieder beginnt, wird die Mischerantriebswelle 23 im Gegenuhrzeigersinn durch den Motor 22 gedreht. Die Reibung durch die Sperrklinke 35 reicht dabei aus, das Zahnrad 34 festzuhalten, so dass der Vorsprung 32 auf der Rampe 33 nach unten wandern kann, bis er an eine Anschlagfläche 36 anstößt. Dabei wird die Mischerantriebswelle 23 in axialer Richtung nach unten und in Eingriff mit der Mischdüse 10 bewegt. Durch die Drehung werden der Wellenansatz 24 in korrekten Eingriff mit der zum Wellenansatz 24 korrespondierenden Ausnehmung 25 und die Mischelemente zur Rotation gebracht. Das Zahnrad 34 dreht sich mit, hat aber ansonsten im Moment keine weitere Funktion.

Soll nun die Mischdüse 10 ausgewechselt werden, so wird der Motor und damit die Mischerwelle 23 in der entgegengesetzten Richtung, das heißt im Uhrzeigersinn um ungefähr 270° bewegt. Das Zahnrad 34 kann sich dabei aufgrund der Wirkung der Sperrklinke 35 nicht mitdrehen. Der Vorsprung 32 wandert auf der Rampe 33 nach oben und zieht dadurch die Mischerwelle 23 zurück, so dass die Mischerdüse ausgewechselt werden kann.

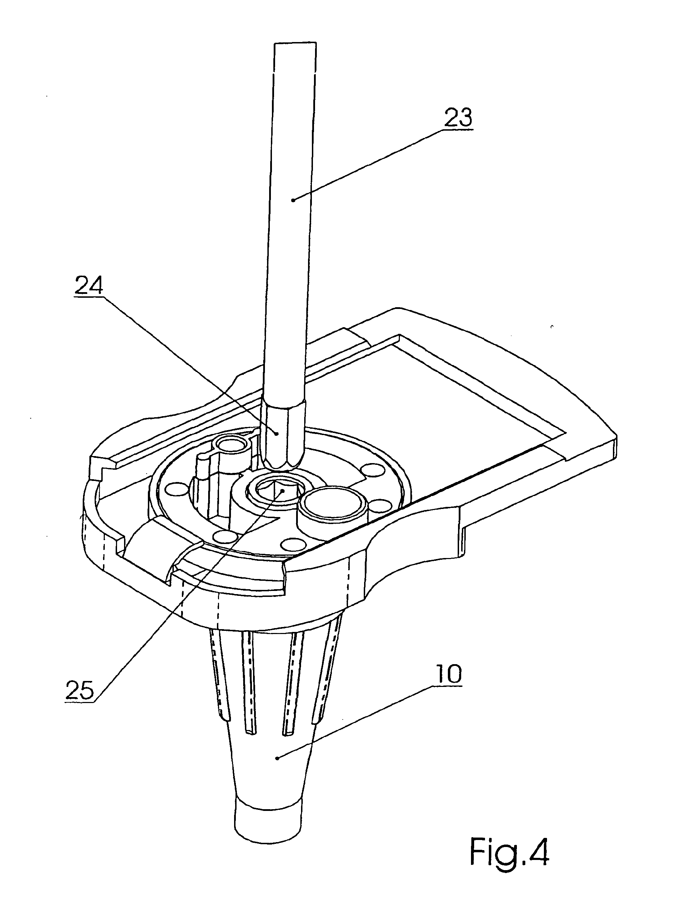

In Fig. 4 ist im Detail und im vergrößerten Maßstab die Mischerdüse 10 gezeigt, aus der der Wellenansatz 24 der Mischerantriebswelle 23 herausgezogen ist. Der Wellenansatz 24 ist dabei mehrkantig ausgebildet, um Antrieb der Mischerdüse 10 zu bewirken.

## Patentansprüche

1. Gerät zum Erzeugen einer Mehrkomponentenmasse, insbesondere für Dentalzwecke, durch Auspressen und Mischen ihrer Komponenten aus Kartuschen (5), die in einem dynamischen Mischer (10) münden und austauschbar in dem Gerät angeordnet sind, mit einem ersten Motor (15) für den gemeinsamen Vorschub der den Kartuschen zugeordneten Kolben und einem zweiten Motor (22) für drehenden Antrieb von Mischelementen im Mischer (10) über eine Welle (23), die durch Federvorspannung in Eingriff mit dem Mischer (10) gehalten ist und gegen die Federvorspannung vom Mischer (10) zurückziehbar ist, **dadurch gekennzeichnet, dass** die Welle (23) mit einem sich radial erstreckenden Vorsprung (32) versehen ist, der durch die Federvorspannung auf eine rampenförmig ansteigende, am Fuß derselben mit einer Anschlagfläche (36) versehene Nockenfläche (33) eines mit einer sägezahmförmigen Verzahnung versehenen, mit der Welle (23) koaxialen Zahnrads (34) gedrückt wird, das in einer ersten Winkelrichtung, in der die Nockenfläche (33) ansteigt, durch eine Sperrklinke (35) an einer Drehung gehindert ist und in der dazu entgegengesetzten zweiten Winkelrichtung drehbar ist, wobei bei Drehung in der ersten Drehrichtung die Mischerantriebswelle zurückgezogen wird.

2. Gerät nach Anspruch 1, **dadurch gekennzeichnet, dass** die Rampe (33) sich über einen Winkelbereich von mehr als 270° erstreckt.

3. Gerät nach Anspruch 1 oder 2, **dadurch gekennzeichnet, dass** die Rampe (33) an ihrem oberen Ende einen Anschlag für den Vorsprung (32) der Welle (23) aufweist.

4. Gerät nach einem der Ansprüche 1 bis 3, **dadurch gekennzeichnet, dass** die Drehung in der ersten Winkelrichtung durch elektronische Steuerung nach Drehung um einen vorbestimmten Winkel beendet wird.

## Claims

1. Device for producing a multi-component compound, in particular for dental purposes, by mixing its components after they have been pressed out of cartridges (5) which open into a dynamic mixer (10) and are arranged exchangeably in the device, with a first motor (15) for advancing all of the pistons assigned to the cartridges, and with a second motor (22) for rotary driving of mixing elements in the mixer (10) via a shaft (23), which is held in engagement with the mixer (10) by spring pretensioning and can be pulled back from the mixer (10) counter to the spring pretensioning, **characterized in that** the shaft (23) is provided with a radially extending projection (32) which, by means of the spring pretensioning, is pressed onto a ramp-like upwardly sloping cam surface (33), which is provided on its foot with an abutment surface (36), of a toothed wheel (34) which is provided with saw-like teeth and is coaxial to the shaft (23), which toothed wheel (34), in a first angle direction in which the cam surface (33) slopes upward, is prevented from rotating by a catch (35) and, in the second angle direction opposite thereto, is rotatable, the mixer drive shaft being pulled back during rotation in the first direction of rotation.

2. Device according to Claim 1, **characterized in that** the ramp (33) extends over an angle range of more than 270°.

3. Device according to Claim 1 or 2, **characterized in that** the ramp (33), at its upper end, has an abutment for the projection (32) of the shaft (23).

4. Device according to one of Claims 1 to 3, **characterized in that** the rotation in the first angle direction is ended by electronic control means after rotation has taken place about a predetermined angle.

## Revendications

1. Appareil permettant de produire une pâte à plusieurs composants, en particulier à des fins dentaires, par pressurage et mélange de ses composants sortant de cartouches (5) qui débouchent dans un mélangeur (10) dynamique et sont montées de manière amovible dans l'appareil, comportant un premier moteur (15) pour faire avancer conjointement les pistons associés aux cartouches et un deuxième moteur (22) pour la propulsion rotative des éléments du mélange dans le mélangeur (10) par l'intermédiaire d'un arbre (23) qui, sous l'effet d'une précontrainte par ressort, est maintenu en prise avec le mélangeur (10) et peut être retiré du mélangeur (10) dans le sens opposé à la précontrainte du ressort, **caractérisé en ce que** l'arbre (23) est muni d'une saillie (32), qui s'étend dans le sens radial et qui, sous l'effet de la précontrainte par ressort, est poussée sur une surface de came (33), en forme de rampe ascendante, munie d'une surface de butée (36) à son pied, d'une roue dentée (34) coaxiale à l'arbre (23), laquelle est munie d'une denture en dents de scie et laquelle est empêchée de tourner par un cliquet de verrouillage (35) dans une première direction angulaire, dans laquelle la surface de came (33) est ascendante, et est apte à tourner dans la deuxième direction angulaire opposée à celle-ci, l'arbre d'entraînement du mélangeur étant retiré lors de la rotation dans la première direction angulaire.

2. Appareil selon la revendication 1, **caractérisé en ce que** la rampe (33) s'étend sur une plage angulaire supérieure à 270°.

3. Appareil selon la revendication 1 ou 2, **caractérisé en ce que** la rampe (33) comporte à son extrémité supérieure une butée pour la saillie (32) de l'arbre (23).

4. Appareil selon l'une quelconque des revendications 1 à 3, **caractérisé en ce que** la rotation dans la première direction angulaire est terminée par une commande électronique à la suite d'une rotation sur un angle prédéterminé.
